# EUROPEAN PATENT APPLICATION

(11) **EP 1 657 153 A2**
(43) Date of publication of application: **17.05.2006**
(21) Application number: 05021851.0
(22) Date of filing: 06.10.2005
(51) Int. Cl.: B62M 3/00, B62J 23/00

(54) **Bicycle crank cover assembly**

(30) Priority: 15.11.2004 US 989039
(71) Applicant: SHIMANO INC., Osaka 590-8577 (JP)
(72) Inventor: Okada, Shigekatsu, Sakai Osaka (JP)
(74) Representative: GROSSE BOCKHORNI SCHUMACHER

(57) **Abstract**

A cover 50, 90 for a bicycle crank 36, 38 having an axle mounting boss 42, 46 is provided. The cover 50, 90 includes first and second connected members 52, 96; 72, 118 and includes a space 84, 109 between the cover and the axle mounting boss.

## Description

### Field of the Invention

The present invention relates generally to bicycle crank assemblies, and more particularly, to a bicycle crank cover.

### Background of the Invention

Bicycles typically include a crank assembly mounted in the bottom bracket of a bicycle frame. The crank assembly enables the rider to rotate the wheels of the bicycle by using his or her legs to rotate right and left bicycle pedals, which in turn rotate corresponding cranks therewith. The crank itself is typically an elongated forged member that is connected at one end to a pedal and at another end to a crank axle that is rotatably mounted in the bottom bracket. By rotating the pedals, and therefore the crank, the rider rotates the crank axle. The crank axle is typically connected to one or more sprockets which rotate coaxially with one of the two crank arms. The rotation of the sprocket rotates the wheels by a chain and derailleur assembly.

It is desirable to protect the crank and the crank assembly from exposure to water, dirt, and other elements which may corrode or damage the crank, crank axle or other crank assembly components. To address these concerns, crank covers have been developed. One method of creating the covers is overmolding plastic onto the forged crank. However, the plastic overmolding process can cause damage to the holes into which the pedal shaft and crank axle are inserted. Also, the covers can only be formed after the forging of the crank is complete, leading to production inefficiencies.

In addition, known crank covers are typically conformed to the shape of the axle mounting boss used to connect the crank to the crank axle. One limitation of such known techniques is that they tend to produce a crank assembly which presents a discontinuous, non-uniform surface appearance, which may be aesthetically unpleasant. In addition, slight changes in the dimensions or shape of the crank's axle mounting boss may require a change in the cover. Accordingly, a need has arisen for a crank cover which addresses the foregoing issues.

### Summary of the Preferred Embodiments

In accordance with one aspect of the present invention, a cover for covering a bicycle crank is provided. The crank has an axle mounting boss, and when the cover is installed on the crank, a space exists between the cover and the axle mounting boss. In a preferred embodiment, the axle mounting boss has a radius defining a radial direction, and the space between the cover and the axle mounting boss is in the radial direction. In another preferred embodiment, the cover comprises an inner member and an outer member, and the inner member and outer member are connected to form the cover.

In other preferred embodiments, the inner member comprises an inner member elongated portion having a length defining an inner member axis and further comprises an inner member projecting member at an end of the inner member elongated portion. The inner member projecting portion projects away from the inner member axis. In further preferred embodiments, the outer member comprises an outer member elongated portion having a length defining an outer member axis and further comprises an outer member projecting portion at an end of the outer member elongated portion. The outer member projecting portion projects away from the outer member axis.

In additional preferred embodiments, the outer member comprises an elongated portion having a length defining an outer member axis and further comprises a circular portion connected to an end of the elongated portion, and the circular portion has a flange projecting away from the outer member axis.

In accordance with another aspect of the present invention, a cover for a bicycle crank is provided. The cover comprises an outer member having a first edge and an inner member having a second edge. The inner member is connected to the outer member to define a cavity for enclosing at least a portion of the crank therein, and a portion of the first edge and a portion of the second edge define an opening in the cover.

In a preferred embodiment, the cavity fully encloses the crank. In other preferred embodiments, the portions of the first and second edges which define the opening oppose each other. In still other preferred embodiments, the inner member and outer member define a substantially cylindrical enclosure proximate the opening.

In accordance with yet another aspect of the present invention, a cover for a bicycle crank is provided which comprises an outer member and an inner member. The outer member has an outer member elongated portion with a length defining an outer member axis and further comprises an outer member projecting portion at an end of the outer member elongated portion. The outer member projecting portion projects away from the outer member axis. An inner member is provided which has an inner member elongated portion with a length defining an inner member axis and further comprises an inner member projecting portion at an end of the inner member elongated portion. The inner member projecting portion projects away from the inner member axis and has a second edge. The inner member and outer member are connected to define a cavity for enclosing at least a portion of the crank, and the first and second edges define an opening in the cover.

In a preferred embodiment, the crank has an axle mounting boss and when the cover is installed on the crank, a space exists between the cover and the axle mounting boss. In other preferred embodiments, the axle mounting boss has a radius defining a radial direction and the space is in the radial direction.

In accordance with a further aspect of the present invention, a cover for a bicycle crank is provided which comprises an outer member having an elongated portion and a circular portion connected to an end of the elongated portion. The circular portion has at least one sprocket boss for connecting the cover to a sprocket. The cover further comprises an inner member connected to the outer member, wherein the inner and outer members define a cavity for enclosing at least a portion of the crank. In preferred embodiments, the crank has an axle mounting boss and when the cover is disposed on the crank, a space exists between the cover and the axle mounting boss.

In other preferred embodiments, the circular portion has a radial direction, inner and outer annular sections which are spaced apart in the radial direction, and the space is between the inner annular section and the axle mounting boss. In still other preferred embodiments, the inner annular section of the outer member includes a recess for accommodating a portion of the crank. In further preferred embodiments, the inner member has a first peripheral edge, the outer member has a second peripheral edge, and the first and second peripheral edges define an opening in the cover. In additional preferred embodiments, the first peripheral edge and second peripheral edge define a substantially circular edge. In other preferred embodiments, the inner member and outer member each define a circumferential portion of a substantially circular surface.

In an additional aspect of the present invention, a cover for a bicycle crank having an axle mounting boss is provided. The cover comprises an outer member having an elongated portion and a circular portion at an end of the elongated portion. The circular portion has a radial direction and inner and outer annular sections spaced apart in the radial direction. The circular portion also has an inner member. The inner member and outer member are connected to define a cavity for enclosing at least a portion of the crank. When the cover is disposed on the crank, there is a space between the annular section and the axle mounting boss. In a preferred embodiment, the circular portion has an axial direction and the outer annular section has a slope in the axial direction.

In yet a further aspect of the present invention, a cover for use with a bicycle crank having an axle mounting boss and an outer surface is provided. The cover has an inner surface and when the cover is disposed on the crank, the cover inner surface and the axle mounting boss outer surface are not flush.

In still another aspect of the present invention, a cover for a bicycle crank is provided which comprises an outer member having an elongated portion and a circular portion connected to an end of the elongated portion. The circular portion has a flange. The cover also comprises an inner member having an elongated portion with a length defining an axis and a projecting portion connected at one end of the elongated portion and projecting away from the axis. The inner member and outer member are connected to forma cavity for enclosing at least a portion of the crank therein, and the inner member projecting portion and the outer member flange each define a circumferential portion of a substantially circular surface. In a preferred embodiment, the crank has an axle mounting boss and there is a space between the cover and the axle mounting boss.

In accordance with a further aspect of the present invention, a bicycle crank assembly is provided which comprises a bicycle crank having a mounting boss and a cover installed on the crank. The cover includes a means for providing a space between the cover and the axle mounting boss.

In accordance with an additional aspect of the present invention, a method of making a bicycle crank assembly is provided. The method comprises providing a bicycle crank having an axle mounting boss, providing a first member, and providing a second member. The crank is enclosed between the first and second members. The first and second members are connected to form a cover such that a space exists beteween the cover and the axle mounting boss.

### Brief Description of the Drawings

The invention may be more readily understood by referring to the accompanying drawings in which:
FIG. 1 is a cross-sectional view of a crank assembly used to illustrate a right and left crank covers in accordance with a preferred embodiment the present invention;
FIG. 2 is an exploded view of the left crank cover of FIG. 1;
FIG. 3 is an exploded view of a left crank cover and crank in accordance with a preferred embodiment of the present invention;

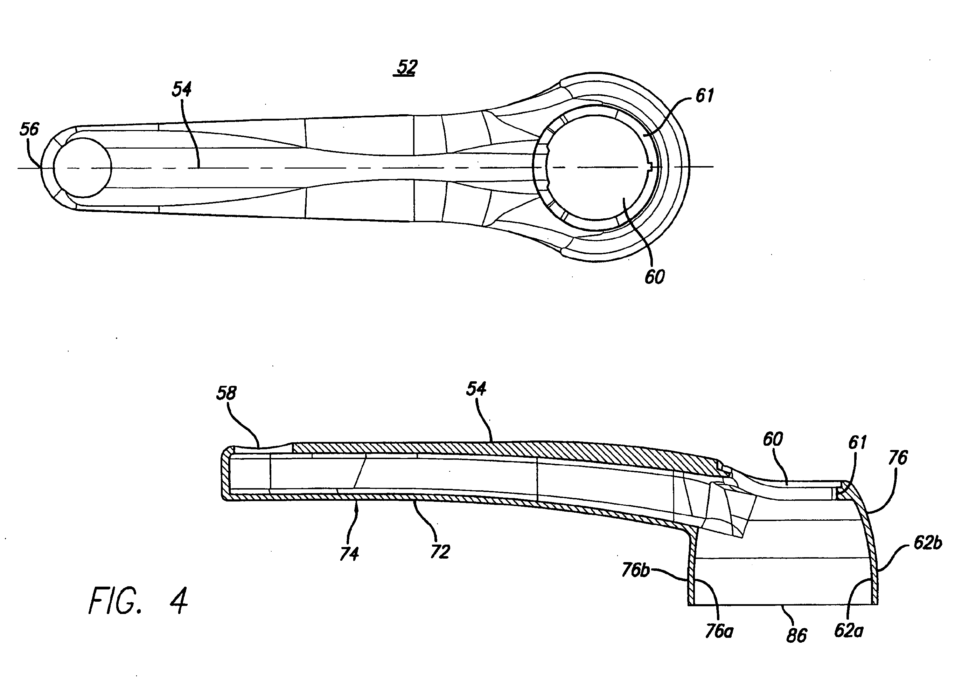

FIG. 4 is a side elevation and cross-sectional view of a left crank cover in accordance with a preferred embodiment of the present invention;
FIG. 5 is a side elevation and cross-sectional view of a left crank cover cap in accordance with a preferred embodiment of the present invention;
FIG. 6 is an exploded view of a portion of a crank assembly and a right crank cover in accordance with a preferred embodiment of the present invention;
FIG. 7 is a side elevation and cross-sectional view of a right crank cover in accordance with a preferred embodiment of the present invention;
FIG. 8 is a detailed perspective view of a right crank cover and crank assembly in accordance with a preferred embodiment of the present invention; and
FIG. 9 is a side elevation and cross-sectional view of a right crank cover cap in accordance with a preferred embodiment of the present invention.

Like numerals refer to like parts throughout the several views of the drawings.

### Detailed Description of the Preferred Embodiments

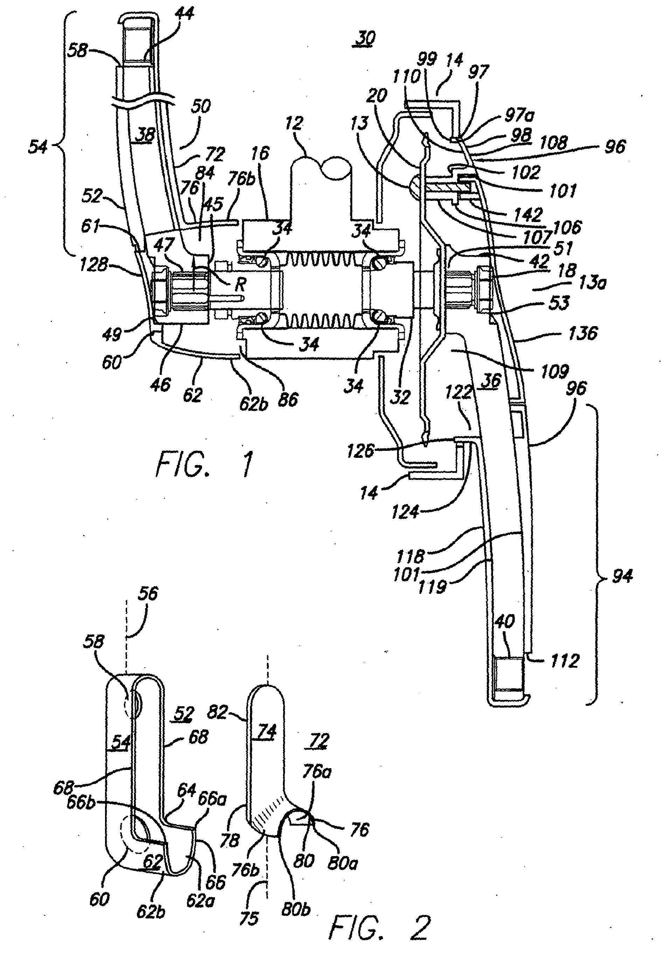

Referring to FIG. 1, a cross-sectional view of a bicycle crank assembly 30 is shown. Crank assembly 30 is installed in a bottom bracket 16 which runs perpendicularly to the bicycle frame's seat tube 12. Bottom bracket 16 is a hollow tube which is dimensioned to accommodate a crank axle 32. Crank axle 32 is rotatably supported in bottom bracket by ball bearings 34. At opposite ends of crank axle 32, right and left cranks 36 and 38 are provided. Cranks 36 and 38 are used to transmit the rotation of the rider's legs to sprocket 20 via crank axle 32. Rotation of sprocket 20 rotates the rear wheels of the bicycle via a chain, derailleur, and rear sprocket assembly (not shown).

Left crank 38 includes an axle mounting boss 46 at one end and a pedal mounting boss 44 at another end. Pedal mounting boss 44 preferably comprises a threaded opening which is used to attach a bicycle pedal. Axle mounting boss 46 has first and second openings 45 and 49 through which a bolt 47 is inserted to connect crank 38 to crank axle 32, thereby enabling left crank 38 to rotate with crank axle 32.

Similarly, right crank 36 includes axle mounting boss 42. Axle mounting boss 42 has first and second openings 51 and 53 through which bolt 18 is inserted to connect right crank 36 to crank axle 32, thereby enabling right crank 36 to rotate with crank axle 32. Sprocket 20 is also mounted on crank axle 32 to rotate therewith. Thus, when left crank 36 or right crank 38 are rotated, sprocket 20 also rotates to move a chain (not shown) disposed on the sprocket teeth, which in turn rotates a rear sprocket assembly (not shown) to move the rear wheels.

In accordance with this embodiment of the present invention, left crank 38 includes left crank cover 50. Left crank cover 50 is preferably made of metals such as steel or aluminum, or rigid plastic material, with metallic materials being especially preferred.

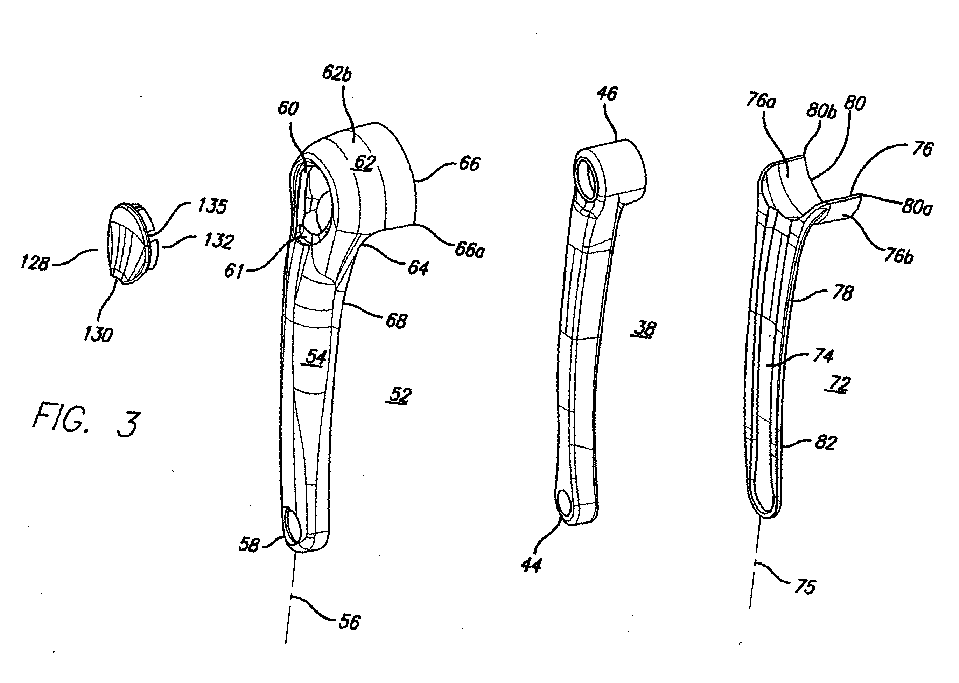

As best seen in FIGS. 2 and 3, left crank cover 50 preferably comprises two members, an outer member 52, which is preferably a shell-type structure, and an inner member 72. Outer member 52 and inner member 72 cooperatively fit together to define a cavity for enclosing left crank 38. Outer member 52 preferably has a mating portion 68 along its peripheral edge 64 which engages a corresponding mating portion 82 along the inner member's peripheral edge 78.

Outer member 52 includes an elongated portion 54 which has an axis 56 along its length. Projecting portion 62 is provided at one end of outer member 52 and projects away from axis 56. Outer member 52 has a cross-sectional profile that is preferably substantially L-shaped. Similarly, inner member 72 includes an elongated portion 74 having an axis 75 along its length. Inner member 72 also includes a projecting portion 76 which projects away from axis 75 to create a cross-sectional profile which is also preferably substantially L-shaped.

Outer member 52 may be attached to inner member 72 by any of a variety of known attachment methods such as gluing, bolting or providing a snap-fit connection. In the embodiment of FIG. 1, outer member 52 and inner member 72 are glued together at various locations along the respective mating portions 68 and 82 of their peripheral edges 64 and 78. Preferably, projecting portion 62 of outer member 52 is shaped to create a surface that is concave when viewed from distal end 51 of elongated portion 54 along axis 56. Opposing edge 66 is spaced apart from elongated portion 54 and distal end 51. More preferably opposing edge 66 is an arcuate edge having a substantially uniform radius of curvature. Inner and outer surfaces 62a and 62b are also preferably arcuate, with each surface having a substantially uniform radius of curvature.

Projecting portion 76 of inner member 72 is preferably shaped to create a surface that is convex when viewed from distal end 71 along inner member axis 75. Opposing edge 80 is spaced apart from elongated portion 74 and distal end 71. More preferably, opposing edge 80 is an arcuate edge having a substantially uniform radius of curvature. Inner and outer surfaces 76a and 76b are also preferably arcuate with each surface having a substantially uniform radius of curvature. As will be described below, the use of opposing concave and convex projecting portions on inner member 72 and outer member 52, allows the two members to be aligned to define an enclosure for accommodating an axle mounting boss.

When mating portions 68 and 82 are aligned, opposing edges 66 and 80 define an opening 86 in left crank cover 50. As a result, the outer and inner member projecting portions 62 and 76 define an enclosure that is preferably a substantially cylindrical enclosure, and which more preferably has a smooth and uniform surface profile around its periphery. Inner and outer members 52 and 72 are preferably dimensioned such that crank 38 is snugly secured between elongated portions 54 and 74 of inner and outer members 54 and 74, thereby eliminating the need for either member to be separately attached to crank 38. However, if desired, either or both members 52 and 72 may be attached to crank 38 by known attachment methods such as gluing, bolting or snap-fitting.

In accordance with this embodiment, it is especially preferred that the enclosure defined by the outer and inner members 52 and 72 is shaped and dimensioned to create a space 84 (FIG. 1) between axle mounting boss 46 and inner surfaces 76a and 62a of the inner and outer members 652 and 72 when they are connected to form cover 50. Space 84 preferably has a component in the radial direction of the substantially cylindrical enclosure formed by projecting portions 62 and 76 of outer and inner members 52 and 72 and also in the radial direction of crank axle 32. When crank 38 is installed on crank axle 32 and cover 50 is installed on crank 38, space 84 preferably surrounds axle mounting boss 46 along at least a portion of its axial length. In this installed condition, the radial distance of space 84 between cover 50 and axle mounting boss 46 is appreciable and is preferably at least about 1.0 mm and more preferably at least about 2.0 mm. A space 84 of at least about 3 mm is especially preferred.

To provide space 84, the radii of curvature of the opposing inner surfaces of outer member projecting portion 62 and inner member projecting portion are preferably selected to be greater than the radius R of the outer surface of axle mounting boss 46 by the margin needed to produce the desired clearance.

When cover 50 is disposed on crank assembly 30, outer surfaces 76b and 62b of inner and outer member projecting portions 76 and 62 are preferably in substantial alignment with the outer surface of bottom bracket 16, thereby providing a substantially continuous surface along bottom bracket 16 and cover 50. To provide a substantially continuous surface, projecting portions 62 and 76 are preferably shaped such that the radii of curvature of their respective outer surfaces 62b and 76b are substantially equal to the radius of the outer surface of bottom bracket 16. It is also preferred that the projecting portions 62 and 76 are dimensioned such that opposing edges 66 and 80 are substantially co-planar when mating portions 68 and 82 are aligned, with no discontinuities at terminal points 66a and 80a or 66b and 80b, thereby providing a substantially uniform edge at cover opening 86. It is especially preferred that opposing edges 66 and 80 define a substantially uniform and circular edge at opening 86 of left crank cover 50.

As best seen in FIGS. 2 and 3, left crank cover 50 preferably includes a pedal mounting aperture 58 which is aligned with pedal mounting boss 44 to allow the installation of a pedal. Left crank cover 50 also preferably includes a cap aperture 60 over which a left crank cover cap 128 is positioned. The inclusion of left crank cover cap 128 provides for increased serviceability by allowing axle mounting boss 46 and bolt 47 to be accessed without removing the entire left crank cover 50.

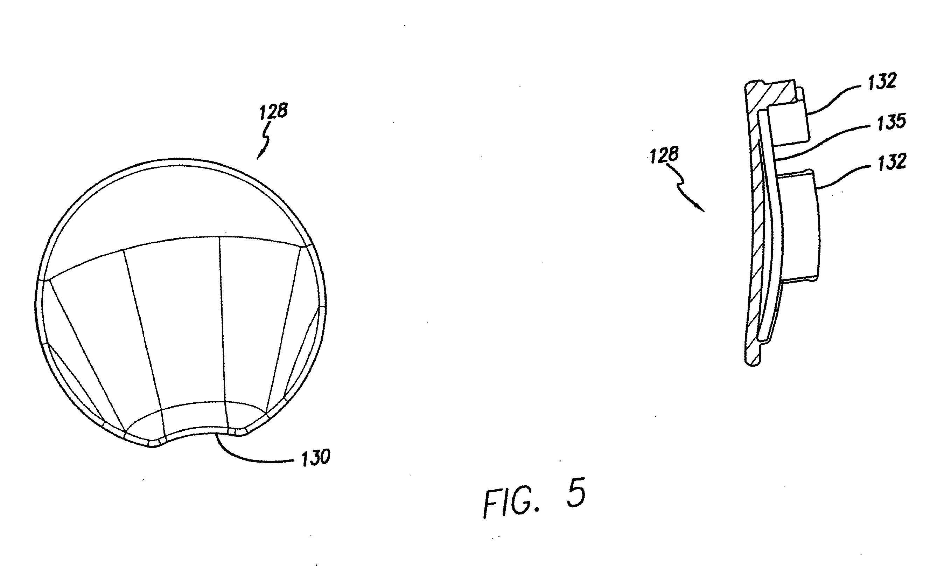

As shown in FIG. 3, cap aperture 60 preferably includes an inner flange 61 which projects radially inward of the aperture 60. Cap 128 includes a segmented collar 132 for snap-fitting cap 128 into aperture 60. Segmented collar 132 is resiliently biased in a radially outward direction, thus allowing cap 128 to be snap-fit into aperture 60 via abutting engagement with a radially inner peripheral edge of inner flange 61. When cap 128 is installed, an inner peripheral surface 135 of cap 128 seats against the axially outer surface of inner flange 61. As shown in FIG. 5, notch 130 is also provided on to allow cap 128 to be removed from left crank cover 50 with a screwdriver or other tool.

Referring to FIGS. 1 and 6-8, a preferred embodiment of a cover 90 for right crank 36 will now be described. Like left crank cover 50, right crank cover 90 is preferably made of metals such as steel or aluminum, or rigid plastic material, with metallic materials being especially preferred.

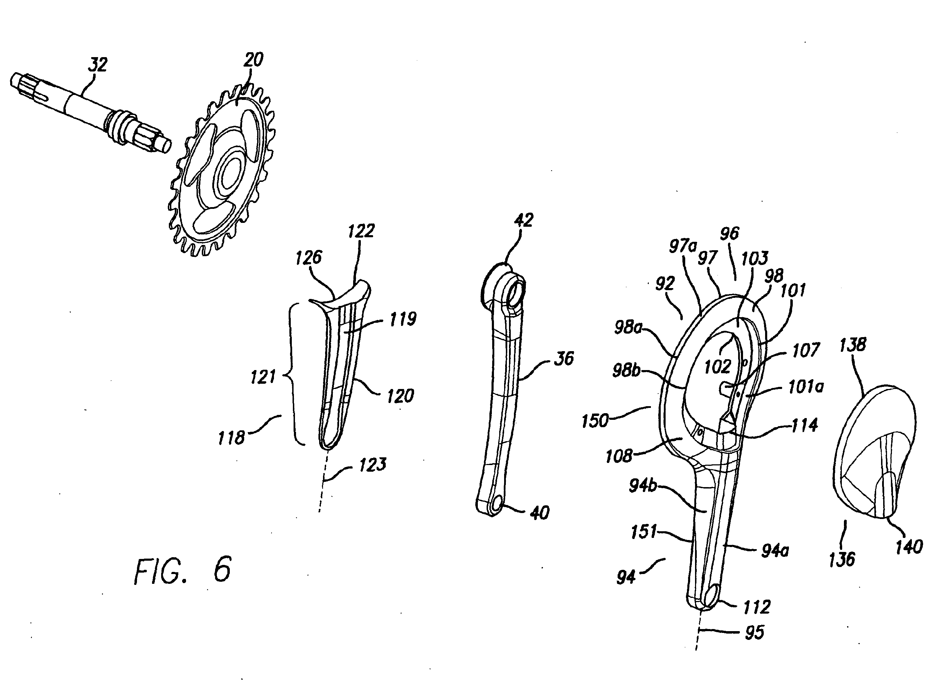

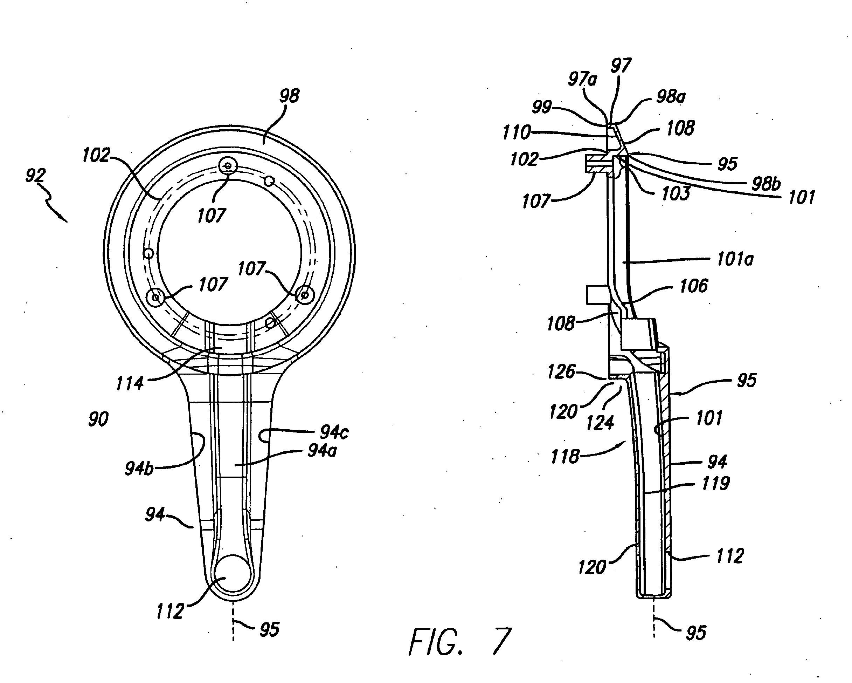

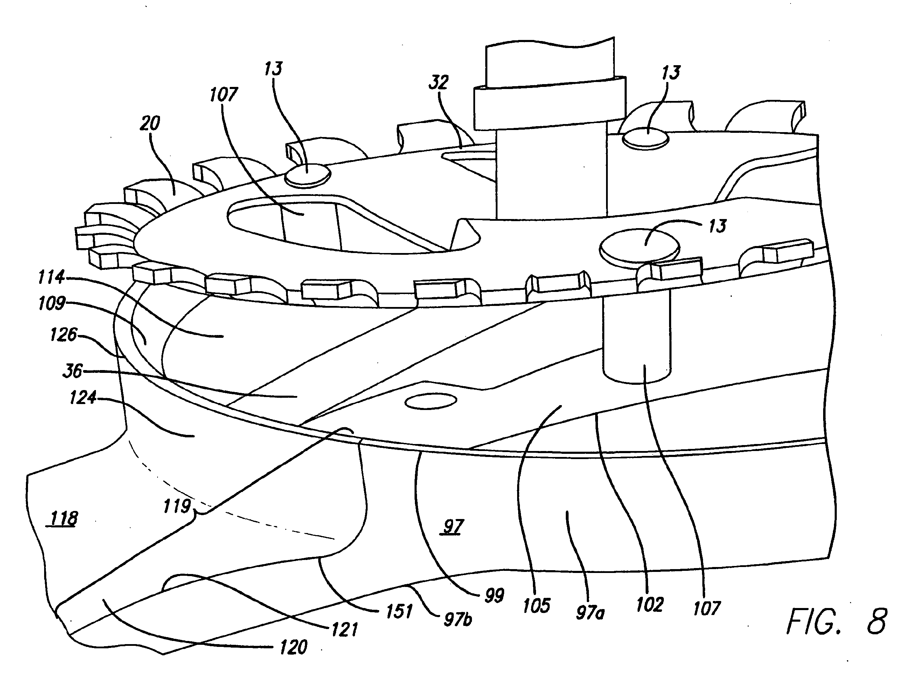

As best seen in FIGS. 6 and 7, cover 90 includes an outer member 96 and inner member 118 which cooperatively fit together to define a cavity for housing at least a portion of right crank 36. Outer member 96 includes an elongated portion 94 connected to a circular portion 92. Elongated portion 94 is a three-sided enclosure having a top surface 94a, side surfaces 94b and 94c, and an axis 95 along its length. Outer member 96 includes a peripheral edge 150 which faces toward seat tube 12 and left crank 38. Peripheral edge 150 includes a mating portion 151 (see FIGS. 6 and 8) which runs along the side surfaces 94b and 94c. A pedal mounting aperture 112 is provided at one end of elongated portion 94. Pedal mounting aperture 112 is aligned with pedal mounting boss 40 on right crank 36 to allow a pedal to be mounted therethrough.

At the end of elongated portion 94 which is opposite pedal mounting aperture 112, elongated portion 94 is preferably integrally formed with circular portion 92. Circular portion 92 includes a radially (i.e. along the radial direction of circular portion 92) outer annular ring 98 which is preferably sloped in the axial direction of circular portion 92 (i.e., in the direction of the longitudinal axis of crank axle 32) and away from outer member elongated portion axis 95. Radially outer annular ring 98 has a radially inner edge 98b and a radially outer edge 98a (see FIG. 7). Radially outer edge 98a is relatively closer to seat tube 12 and left crank 38 than is radially inner edge 98b. Outer annular ring 98 further includes inner surface 110 facing towards seat tube 12 and outer surface 108 facing away from seat tube 12.

A radially outer flange 97 is provided at radially outer edge 98a of outer annular ring 98. Radially outer flange 97 projects away from outer member elongated portion axis 95 in a direction which is substantially parallel to the crank axle 32. Radially outer flange 97 also includes a peripheral edge 99 and a radially outer peripheral surface 97a (see FIGS. 7-8). As best seen in FIG. 8, a portion of outer flange 97 is relieved proximate elongated portion 94 in order to create a segment 97b of mating portion 151 which cooperates with inner member 118 to enclose right crank 36, as described in greater detail below. As shown in FIG. 1, when right crank cover 90 is installed on a bicycle crank, radially outer flange 97 preferably closely fits with inner surface of a chainstay case 14 but is rotatable within chainstay case 14. It is especially preferred that when right cover 90 is installed on right crank 36, radially outer flange 97 acts as a chain guard which aids in preventing the rider's foot from coming into contact with the bicycle chain.

Radially inner flange 101 is provided at the radially inner edge 98b of radially outer annular ring 98 and projects away from axis 95 in the axial direction of circular portion 92. Radially inner flange 101 includes an radially inner peripheral surface 101 a which defines an opening in circular portion 92 for accommodating a right crank cover cap 140, as described below.

A radially inner annular ring 102 is spaced apart from radially inner edge 98b of radially outer annular ring 98 by radially inner flange 101. As best shown in FIG. 7, radially inner annular ring 102 includes an outer surface 103 which faces in the axial direction of circular portion 92 away from seat tube 12 and an inner surface 105 which faces in the axial direction of circular portion 92 towards seat tube 12. Radially inner annular ring 102 further includes a recessed portion 114 which projects away from seat tube 12. Recessed portion 114 and elongated portion 94 define an elongated recess for accommodating a portion of crank 36.

Right crank outer member 96 is preferably attached to sprocket 20 and rotatable therewith. It is especially preferred to connect outer member 96 to sprocket 20 with one or more setting bolts 13. Radially inner annular ring 102 preferably has one or more setting bolt bosses 107 which engage setting bolts 13 to connect right crank outer member 96 to sprocket 20. In a preferred embodiment, setting bolt bosses are internally threaded and engage complementary external threads on the setting bolts 13.

As mentioned above, right crank cover 90 further comprises an inner member 118 which cooperatively fits with outer member 96 to define a cavity for enclosing at least a part of crank 36. As best shown in FIGS. 6 and 8, inner member 118 has an elongated portion 120 with an axis 123 along its length and a projecting portion 122 that projects away from axis 121 towards seat tube 12. Inner member 118 further has an outer peripheral edge 119 (one half of which his shown in FIG. 6), which includes a mating portion 121. When cover 90 is assembled, mating portion 121 is aligned and engaged with corresponding mating portion 151 along the peripheral edge 150 of outer member 96. Inner member 118 and outer member 96 may be connected by any variety of known methods, such as gluing, bolting or a snap-fit connection. In the embodiment of FIG. 8, they are connected by gluing.

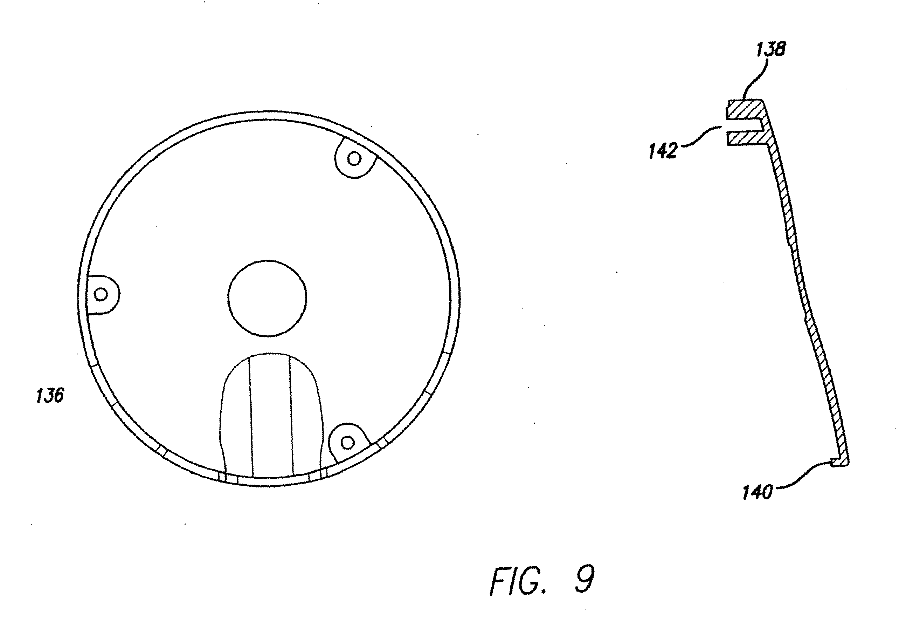

The inner surface 119 of the inner member elongated portion 120 defines a cavity with the inner surface 101 of outer member elongated portion 94 to enclose a portion of right crank 36. In addition, peripheral edge 99 of radially outer flange 97 opposes outer peripheral edge 126 of inner member inner member projecting portion 122 to define an opening 109 (FIGS. 1 and 9) for accommodating right crank axle mounting boss 42 therein. Preferably, radially outer surface 124 of inner member projecting portion 122 is substantially aligned with radially outer surface 97a of radially outer flange 97, such that the surfaces are substantially continuous at edge 97b, thereby creating a substantially uniform peripheral surface around right crank cover 90.

As mentioned previously, a right crank cover cap 136 is preferably positioned over the opening defined by radially inner peripheral surface 101a of radially inner flange 101. Cap 136 conceals the sprocket 20, crank 36, bolt 18 etc. from view and preferably provides a smooth uniform appearance while providing access to crank assembly 30. As best seen in FIGS. 6 and 9, cap 136 has an outer flange 138 which preferably seats against inner peripheral surface 101a when cap 136 is installed in outer member 96.

To provide secure installation, cap 136 more preferably has a plurality of setting bolt bosses 142 (FIG. 9) which are aligned with corresponding setting bolt bosses 107 on outer member 96. As shown in FIG. 1, cap setting bolt bosses 107 are dimensioned and positioned to accept the free ends of setting bolts 13. In the embodiment of FIGS. 1 and 8, cap setting bolt bosses are internally threaded and engage complementary external threads on setting bolts 13. To accommodate inner annular ring recess 114, flange 138 is slightly relieved at a portion 140 positioned proximate recess 114.

A method of forming a crank assembly in accordance with the present invention will now be described. In accordance with the method, right crank 36 and sprocket 20 are first mounted on crank axle 32. Bolt 18 is inserted through crank openings 53 and 51, connected to axle 32 and then tightened. Outer member 96 is then positioned within chainstay case 14 such that crank 36 is disposed within the elongated recess created by radially inner annular ring recess 114 and elongated portion 94.

Inner member 118 is then attached to outer member 96 such that their respective peripheral edge mating portions, 121 and 151 are in alignment. Mating portions 121 and 151 may be glued together at specified positions along their lengths, or other known means such as bolts or snap fit connections may be used to attach inner member 118 to outer member 96.

Setting bolts 13 are next inserted in sprocket 20 and outer member setting bolt bosses 107 (preferably using threaded engagement). Right crank cover cap 136 is then positioned within the opening defined by radially inner surface 101 a of radially inner flange 101 and positioned to align its setting bolt bosses 142 with corresponding free ends of setting bolts 13. Setting bolts 13 are then preferably threadedly engaged with internal threads in setting bolt bosses 142 to secure cap 136 to cover 90.

Left crank cover 50 is preferably installed on left crank 38 before left crank 38 is mounted on crank axle 32. However, left crank 38 may be mounted on crank axle 32 before installing left crank cover 50. In accordance with a preferred embodiment, crank 38 is positioned within outer member 52 such that axle mounting boss 46 is proximate cap aperture 60 and pedal mounting boss 44 is aligned with pedal mounting aperture 58. Inner and outer members 50 and 72 are then attached such that mating portions 68 and 82 are aligned, thereby creating an opening 86 defined by opposing edges 66 and 80. Inner and outer members 50 and 72 may be glued at various locations along mating portions 68 and 82 (as in FIG.1) or they may be attached by other known methods such as bolts or snap-fitting connections. Crank 38 and is then mounted on crank axle 32 by inserting crank axle 32 through cover opening 86 and into axle mounting boss opening 45. Bolt 47 is then inserted through opening 49 and connected to crank axle 32 by known attachment methods and tightened. Although not required, either or both of outer member 52 and inner member 72 may be attached to crank 38 at their respective elongated portions 54 and 74 by using known attachment methods such as gluing, bolting or snap-fit connections. Next, left crank cover cap 128 is inserted into cap aperture 60 such that its segmented collar 132 engages a radially inner peripheral edge of inner flange 61 and such that its axially inner peripheral surface 135 seats against the outer surface of inner flange 61.

In accordance with another preferred embodiment, crank 38 may be installed on axle 32 prior to installing cover 50. According to the method, crank 38 is first mounted on crank axle 32. Bolt 47 is then inserted through axle mounting boss holes 49 and 45, connected to crank axle 32, and tightened. Outer member 52 and inner member 72 are then positioned about crank 38 and attached as described above such that their respective peripheral edge mating portions 68 and 82 are aligned, and pedal mounting boss 44 is aligned with pedal mounting aperture 58. Cover 50 is also preferably positioned such that outer surfaces 62b and 76b are aligned with the outer surface of bottom bracket 16. Cap 128 is then attached as described above. As also described above, either or both of inner and outer member elongated portions 54 and 74 may be attached to crank 38 using known attachment methods to provide extra stability.

The embodiments described above are exemplary embodiments of a the present invention. Those skilled in the art may now make numerous uses of, and departures from, the above-described embodiments without departing from the inventive concepts disclosed herein. Accordingly, the present invention is to be defined solely by the scope of the following claims.

## Claims

1. A cover (50, 90) for covering a bicycle crank (36, 38), the crank (36, 38) having an axle mounting boss (42, 46), wherein when the cover (50, 90) is disposed on the crank, an appreciable space (84, 109) exists between the cover (50, 90) and the axle mounting boss (42, 46).

2. The cover (50, 90) of claim 57, wherein the axle mounting boss (42, 46) has a radius defining a radial direction, and the space (84, 109) between the cover (50, 90) and the axle mounting boss (42, 46) is in the radial direction.

3. The cover (50, 90) of claim 58, wherein the space (84, 109) is at least about 3 mm.

4. The cover (50, 90) of claim 57, wherein the cover (50, 90) comprises an inner member (72, 118) and an outer member (52, 96), and the inner member (72, 118) and outer member (52, 96) are connected to form the cover (50, 90).

5. The cover (50, 90) of claim 60, wherein the inner member (72, 118) comprises an inner member elongated portion (74, 120) having a length defining an inner member axis (75, 123) and further comprises an inner member projecting portion (76, 122) at an end of the inner member elongated portion (74, 120), and wherein the inner member projecting portion (76, 122) projects away from the inner member axis (75, 123).

6. The cover (50, 90) of claim 60, wherein the outer member (52, 96) comprises an outer member elongated portion (54, 94) having a length defining an outer member axis (56, 95) and further comprises an outer member projecting portion (62, 92) at an end of the outer member elongated portion, wherein the outer member projecting portion (62, 92) projects away from the outer member axis (56, 95).

7. The cover (90) of claim 60, wherein the outer member (96) comprises an elongated portion (94) having a length defining an outer member axis (95) and further comprises a circular portion (92) connected to an end of the elongated portion (54, 94), and the circular portion has a flange (101) projecting away from the outer member axis (95).

8. The cover (90) of claim 63, wherein the outer member circular portion (92) has a radial direction and first and second annular sections (102, 98), the second annular section (98) being spaced apart radially inward from the first annular section(102), and wherein the space (109) is between the second annular portion (98) and the axle mounting boss (42).

9. The cover (50, 90) of claim 60, wherein the inner member (72, 118) and the outer member (52, 96)define a substantially cylindrical enclosure and the space is in the substantially cylindrical enclosure.

10. The cover (50, 90) of claim 65, wherein the cover (50, 90) has an opening proximate the substantially cylindrical enclosure.

11. The cover (90) of claim 57, further comprising a sprocket boss (107) for connecting the cover (90) to a bicycle sprocket (20).

12. The cover (90) of claim 67, wherein the cover (90) further comprises a flange (101).

13. The cover (90) of claim 67, further comprising a chain guard portion (97).

14. The cover (90) of claim 57, wherein the cover (90) further comprises an aperture (101 a)and a cap (136) covering the aperture.

15. The cover (90) of claim 70, wherein the cap (136) comprises at least one sprocket boss (142) for connecting the cap (136) to a bicycle sprocket (20).

16. A crank assembly (30) comprising a bicycle crank (36, 38)having the cover (50, 90) of claim 57 disposed thereon.

17. A crank assembly (30) comprising a crank axle (32), a crank (36, 38), a connector (18, 61) connecting the crank (36, 38) to the crank axle (32), and the cover (50, 90) of claim 70 disposed on the crank (32), wherein the connector is located proximate the aperture and the cap (60, 136) covers the connector.

18. The crank assembly (30) of claim 73, wherein the cap (136) comprises at least one sprocket boss (142) for connecting the cap (136) to a bicycle sprocket (20).

19. The crank assembly (30) of claim 73, wherein the connector is a bolt.

20. A cover (50, 90) for use with a bicycle crank (36, 38), the crank (36, 38) having an axle mounting boss (42, 46) having an outer surface, the cover (50, 90) having an inner surface (62a), wherein when the cover (50, 90) is disposed on the crank, the cover inner surface and the axle mounting boss outer surface are not flush.

21. A cover (50, 90) for a bicycle crank, comprising:
an outer member (52, 96), having a first edge (64, 150);
an inner member (72, 118), having a second edge (78, 119);
wherein the inner member (72, 118) is connected to the outer member (52, 96) to define a cavity for enclosing at least a portion of the crank (36, 38) therein, and
wherein a portion of the first edge (64, 150) and a portion of the second edge (78, 119) define an opening in the cover (50, 90).

22. The cover (50, 90) of claim 77, wherein the cavity fully encloses the crank.

23. The cover (50, 90) of claim 77, wherein said portion of the second edge (78, 119) opposes said portion of the first edge (64, 150).

24. The cover (50, 90) of claim 77, wherein said portion of the first edge (64, 150) and said portion of the second edge (78, 119) which define the opening are coplanar.

25. The cover (50, 90) of claim 77, wherein the outer member (52, 96) comprises an outer member elongated portion (54, 94) having a length defining an outer member axis (56, 95) and further comprises an outer member projecting portion (62, 92) at an end of the outer member elongated portion (54, 94), the outer member projecting portion (62, 92) projects away from the outer member axis (56, 95), and said portion of the first edge (64, 150) is on the outer member projecting portion (62, 92).

26. The cover (50, 90) of claim 77, wherein the inner member (72, 118) comprises an inner member elongated portion (74, 120) having a length defining an inner member axis (75, 123) and further comprises an inner member projecting portion (76, 122) at an end of the inner member elongated portion, the inner member projecting portion (76, 122) projects away from the inner member axis (75, 123), and said portion of the second edge (78, 119) is on the inner member projecting portion (76, 122).

27. The cover (50, 90) of claim 77, wherein the inner member (72, 118) and outer member (52, 96) define a substantially cylindrical enclosure proximate the opening.

28. A crank assembly (30), comprising a bicycle crank (36, 38) having an axle mounting boss (42, 46)and the cover (50, 90) of claim 77 disposed thereon, wherein at least a portion of the crank (36, 38) is disposed in the cavity, and there is an appreciable space (84, 109) between the cover (50, 90) and the axle mounting boss (42, 46).

29. The crank assembly (30) of claim 84, wherein the space (84, 109) is proximate the opening.

30. The crank assembly (30) of claim 84, wherein the axle mounting boss (42, 46) has a radius defining a radial direction and the space (84, 109) is in the radial direction.

31. The crank assembly (30) of claim 84, wherein the inner member (72, 118) and outer member (52, 96) define a substantially cylindrical enclosure proximate the opening and the space (84, 109) is in the substantially cylindrical enclosure.

32. A cover (50, 90) for a bicycle crank, the cover (50, 90) comprising:
an outer member (52, 96) having an outer member elongated portion (54, 94) with a length defining an outer member axis (56, 95) and further having an outer member projecting portion (62, 92) at an end of the outer member elongated portion (54, 94),
wherein the outer member projecting portion (62, 92) projects away from the outer member axis (56, 95) and the outer member projecting portion (62, 92) has a first edge (66, 102);
an inner member (72, 118) having an inner member elongated portion (74, 120) with a length defining an inner member axis (75, 123) and further having an inner member projecting portion (76, 122) at an end of the inner member elongated portion,
wherein the inner member projecting portion (76, 122) projects away from the inner member axis (75, 123) and has a second edge (80, 122);
wherein the inner member (72, 118) and outer member (52, 96) are connected to define a cavity for enclosing at least a portion of the crank (36, 38) therein, and the first and second edges (66, 102; 80, 122) define an opening in the cover (50, 90).

33. The cover (50, 90) of claim 88, wherein the crank (36, 38) has an axle mounting boss (42, 46) and when the cover (50, 90) is disposed on the crank, a space exists between the cover (50, 90) and the axle mounting boss (42, 46).

34. The cover (50, 90) of claim 89 wherein the axle mounting boss (42, 46) has a radius defining a radial direction and wherein the space between the cover (50, 90) and the axle mounting boss (42, 46)is in the radial direction.

35. The cover (50, 90) of claim 88, wherein the first and second projecting portions define a substantially cylindrical enclosure proximate the opening.

36. A crank assembly (30) comprising a crank (36, 38) having the cover (50, 90) of claim 89 disposed thereon.

37. A cover (90) for a bicycle crank (36), the cover (90) comprising:
an outer member (96) having an elongated portion (94) and a circular portion connected to an end of the elongated portion (94), the circular portion (92) having at least one sprocket boss (107) for connecting the cover (90) to a sprocket (20);
an inner member (118) connected to the outer member (96), wherein the inner and
outer members define a cavity therein for enclosing at least a portion of the crank (36).

38. The cover (90) of claim 93, wherein the crank (36) has an axle mounting boss (42) and when the cover (90) is disposed on the crank (36), an appreciable space (109) exists between the cover (90) and the axle mounting boss (42).

39. The cover (90) of claim 94, wherein when the axle mounting boss (42)has a radius defining a radial direction and the space (109) is in the radial direction.

40. The cover (90) of claim 94, wherein the circular portion (92) has a radial direction, inner and outer annular sections (98, 102) spaced apart in the radial direction, and the space (109) is between the inner annular section (102) and the axle mounting boss (42).

41. The cover (90) of claim 96, wherein the inner annular section (102) of the outer member (96)includes a recess (114) for accommodating a portion of the crank (42).

42. The cover (90) of claim 93, wherein the inner member (119) has a first peripheral edge (119), the outer member (96)has a second peripheral edge (151) and the first and second peripheral edges (119, 151) define an opening in the cover (90).

43. The cover (90) of claim 93, wherein the first peripheral edge and second peripheral edge (119, 151) define a substantially circular edge.

44. The cover (90) of claim 93, wherein the inner member (118) and outer member (96)each define a circumferential portion of a substantially circular surface.

45. An assembly, comprising:
a crank axle (32);
a sprocket (20) mounted on the crank axle (32);
a bicycle crank (36, 38)mounted on the crank axle (32) proximate the sprocket (20) ; and
the crank cover (50, 90) of claim 93,
wherein the cover (50, 90) is disposed on the crank (36, 38) such that at least a portion of the crank (36, 38) is enclosed in the cavity and the sprocket boss (107) is connected to the sprocket (20)
.

46. A cover (90) for a bicycle crank (36)having an axle mounting boss (42), the cover (90) comprising:
an outer member (96)having an elongated portion (94) and a circular portion (92) at an end of the elongated portion (94), the circular portion (92) having a radial direction and inner and outer annular sections (98, 102) spaced apart in the radial direction; and
an inner member (118);
wherein the inner member (118) and outer member (96) are connected to define a cavity for enclosing at least a portion of the crank (36) therein, and wherein when the cover (90) is disposed on the crank, there is an appreciable space between the inner annular section and the axle mounting boss.

47. The cover (90) of claim 102, wherein the circular portion (92) further has an axial direction and the outer annular section (98) has a slope in he axial direction.

48. A cover (90) for a bicycle crank, the cover (90) comprising:
an outer member (96) having an elongated portion (94) and a circular portion (92) connected to an end of the elongated portion (94), the circular portion (92) having a flange (101);
an inner member (118) having an elongated portion (121) with a length defining an axis (123) and further having a projecting portion (122) connected at one end of the elongated portion (12) and projecting away from the axis (123);
wherein the inner member (118) and outer member (96)are connected to form a cavity for enclosing at least a portion of the crank (36)therein, and the inner member projecting portion (122) and the outer member flange (101) each define a circumferential portion of a substantially circular surface.

49. The cover (90) of claim 104, wherein the crank (36)has an axle mounting boss (42)and there is space (109) between the cover (90) and the axle mounting boss(42).

50. The cover (90) of claim 105, wherein the axle mounting boss (42)has a radius defining a radial direction and the space (109) is in the radial direction.

51. The cover (90) of claim 104, wherein the circular portion (92) has a radius defining a radial direction and a first annular section (102) located radially inward from the flange (101).

52. The cover (50, 90) of claim 107, wherein the circular portion (92) has a second annular section (98) located radially outward from the first annular section (102).

53. A bicycle crank assembly (30), comprising:
a bicycle crank (36)having an axle mounting boss (42);
a cover (90) installed on the crank (36), the cover (90) including a means for providing a space (109) between the cover (90) and the axle mounting boss (42).

54. The crank assembly (30) of claim 109, wherein the axle mounting boss (42)has a radius defining a radial direction and the space (109) is in the radial direction.

55. A method of making a bicycle crank assembly (30), comprising:
providing a bicycle crank (36, 38) having an axle mounting boss (42, 46);
providing a first member (52, 96);
providing a second member (72, 118);
enclosing the crank (36, 38) between the first and second members ;
connecting the first and second members (52, 96; 72, 118) to form a cover (50, 90), such that an appreciable space exists between the cover (50, 90) and the axle mounting boss (42, 46).

56. The method of claim 111, wherein the axle mounting member has a radius defining a radial direction, and the space is in the radial direction.
